# EUROPEAN PATENT SPECIFICATION

(11) **EP 4 185 116 B1**
(45) Date of publication and mention of the grant of the patent: **30.09.2026**
(21) Application number: 21742443.1
(22) Date of filing: 20.07.2021
(51) Int. Cl.: A21C 9/08, B25J 11/00, B25J 15/06, B65H 15/00, A21B 3/07

(54) **RETURNING UNIT FOR FLAT FOOD PRODUCT LIKE PANCAKES**
RÜCKFÜHREINHEIT FÜR FLACHE NAHRUNGSMITTEL WIE PFANNKUCHEN
UNITÉ DE RETOURNEMENT POUR PRODUITS ALIMENTAIRES PLATS TELS DES PANCAKES

(30) Priority: 21.07.2020 LU 101940
(43) Date of publication of application: 31.05.2023
(73) Proprietor: Acemal International, 9678 Nothum (LU)
(72) Inventor: DE LONGRÉE, Pierre, 9678 Nothum (LU)
(74) Representative: Ipsilon Luxembourg
(86) International application number: PCT/EP2021/070201
(87) International publication number: WO 2022/018052

(56) References cited:
- EP-A1- 2 810 561
- EP-A1- 3 434 160
- CN-U- 202 989 689
- FR-A1- 2 706 164
- GB-A- 2 474 725
- JP-A- H08 198 482

## Description

### Technical field

The invention is directed to the field of production of flat food products which require to be returned during their production, in particular of pancakes requires to be backed on both sides.

### Background art

Prior art patent document published FR 2 706 164 A1 discloses a unit for returning flat food products like pancakes. The returning unit is installed along a main conveyor with cooking plates. The returning unit is comprised of an entry belt conveyor designed for collecting the pancakes from a main conveyor with baking plates, and of a drum-shaped rotating returning element with a circular outer face for receiving the pancakes from the entry conveyor. Once a pancake is received by the returning element, it conforms to the circular shape of the outer face and naturally adheres thereto. A scraper is provided adjacent to the outer face of the rotating element, at a lower position thereto, configured for taking off the pancake from the outer surface. Because of the rotational speed of the pancake on the returning element that is opposite to the translational speed of the main conveyor with the baking plates, the returning element is mounted in a translational fashion relative to the frame of the main conveyor, in order to be moved in the same direction as the translational movement of the main conveyor. In an alternative embodiment, the drum-shaped returning element is replaced by a second belt conveyor. This teaching is interesting in that it can provide an accurate positioning of the food product on the main conveyor after being returned. The food product can however show a varying adhering behaviour on the outer face of the returning element, i.e. not sufficiently adhere and therefore precociously take off and fall in an uncontrolled manner on the main conveyor, or show difficulties in releasing from the outer surface by the scraper, also leading to a potential fall in an uncontrolled manner on the main conveyor. Also the translational movement of the returning element relative to the frame of the main conveyor requires additional space, complexity and costs.

Prior art patent document published EP 1 759 585 A2 discloses also a unit for returning flat food products like pancakes. The returning unit comprises a flat scraper rotatable around about 180° for first collecting a pancake from a main conveyor, and second rotate for pivoting the pancake of about 180° around the rotation axis and bringing it in a returned state to the main conveyor. That returning unit is advantageous in that it is relatively simple and compact. It however requires fine adjustments in the rotation movements. Also the positioning of the food product, once returned, back on the main conveyor can show some inaccuracies essentially due to the dynamic effects required for maintaining the food product in position against the scraper once raised on falling down to the main conveyor.

Prior art patent document published EP 3 434 160 A1 discloses also a unit for returning flat food products like pancakes. The returning unit is comprised essentially of three rolls arranged after the exit of a belt conveyor, the three rolls showing a reduced diameter and being rotated at a reduced speed to as to allow the flat food product to pivot about the last roll when leaving the returning unit. That returning unit is advantageous in that it can transfer the food product without returning action by rotating the rolls at a higher speed. For a proper returning, it requires however a certain rigidity of the food product, where freshly baked pancakes, for instance only on one side, shows a very limited rigidity, meaning that the returning unit of this teaching might not be adequate.

Further relevant prior art is found in JP H08 198482 A.

### Summary of invention

### Technical Problem

The invention has for technical problem to overcome at least one drawback of the above cited prior art. More specifically, the invention has for technical problem to provide a returning unit for flat food products, like pancakes, that provides an accurate and controlled positioning of the food products once returned.

### Technical solution

The invention is directed to a unit for returning one or several flat food products, comprising a returning element configured for rotating around a rotating axis and provided at least one outer face for receiving the one or several flat food products to be returned; wherein the at least one outer face is provided with air aspiration holes for maintaining by depression the one or several flat food products on said outer face when the returning element is rotated with said outer face oriented downwardly.

According to a preferred embodiment, each of the at least one outer face is flat.

According to a preferred embodiment, the at least one outer face comprises a first outer face and a second outer face opposed to the first outer surface.

Advantageously, the returning elements shows a cross-section shape that is polygonal, e.g. rectangle or square.

According to a preferred embodiment, the at least one outer face comprises more than two outer faces distributed around the rotating axis.

According to a preferred embodiment, the returning element is elongate along the rotating axis and each of the at least one outer face is subdivided in several areas each for receiving one of the several flat food products.

According to a preferred embodiment, the returning element comprises a specific vacuum chamber in fluid connection with the air aspiration holes for each of the at least one outer face.

According to a preferred embodiment, the unit further comprises means configured for limiting the vacuum to not more than 50mbar below atmospheric pressure. These means can comprise a ventilator specifically dimensioned for achieving the vacuum of more than 50mbar.

According to a preferred embodiment, the returning element forms a hollow profile extending along the rotation axis and showing a cross-section with at least one outer wall forming the at least one outer face.

According to the invention, the unit further comprises a loading conveyor configured for loading the one or several flat food products on one of the at least one outer face of the returning element.

According to the invention, the loading conveyor is a belt conveyor with a retractable end configured for selectively extending from said belt to bring the one or more flat food products from the belt to one of the at least one outer face of the returning element, and retracting to said belt away from said outer face.

According to a preferred embodiment, the unit further comprises an unloading conveyor located below the returning element and configured for receiving the one or several flat food products in a returned state.

According to a preferred embodiment, the unloading conveyor forms a main conveyor extending on an entry side of the unit, the entry conveyor being configured for collecting the one or more flat food products from the main conveyor.

According to a preferred embodiment, the main conveyor comprises cooking plates attached to each other along a main direction of said main conveyor and configured for receiving, each and along said main direction, one of the flat food products.

According to a preferred embodiment, the unit further comprises at least one vacuum pump fluidly connected to the air aspiration holes of the at least one outer face of the returning element. The vacuum pump can be a ventilator.

According to a preferred embodiment, the at least one vacuum pump is fluidly connected to the at least vacuum chamber of the returning element.

According to a preferred embodiment, the fluid connection of the at least one vacuum pump is angularly fixed relative to the returning element, said returning element being actuated for rotating in a reciprocal manner.

According to a preferred embodiment, the fluid connection of the at least one vacuum pump is angularly rotatable relative to the returning element, said returning element being actuated for rotating in a same rotational direction.

According to a preferred embodiment, the fluid connection of the at least one vacuum pump is located at one or two ends of the returning element along the rotation axis.

According to a preferred embodiment, the unit further comprises a control unit configured for, successively and iteratively, bringing one or several flat food products on one of the at least one outer face of the returning element, applying a depression to the one or several flat food products through the air aspiration holes of said outer face, rotating the returning element so as to return said one or several flat food products, and releasing said depression so that the one or several flat food products separate from the returning element by gravity.

The invention is also directed to a process of returning one or several flat food products, comprising the steps of: (a) loading the one or several flat food products on an outer surface of a returning element; (b) rotating the returning element so as to return the one or several flat food products; and (c) unloading the one or several flat food products from the returning element; wherein step (b) comprises maintaining the one or several flat food products on the outer surface by applying a depression on a lower face of the one or several flat food products via air aspiration holes provided on said outer surface; and step (c) comprises releasing the depression on the one or several flat food products.

According to a preferred embodiment, step (c) comprises applying compressed air to the air aspiration holes for facilitating releasing of the one or several flat food products from the outer surface.

### Advantages of the invention

The invention is particularly interesting in that it provides a better control in the positioning of the returned food product. Accordingly, the production speed can be easily increased. The returning element can indeed be rotated rapidly due to maintaining the food product(s) against the outer face(s) by depression. Also, the unloading of the food product(s) is also better controlled, avoiding the adverse effect of dynamic effects such as in the prior art.

### Brief description of the drawings

Figure 1 is a schematic representation of a production line for baked flat food products like pancakes, equipped with a returning unit according to the invention.
Figure 2 is perspective detail view of a portion of the returning unit.
Figure 3 shows four successive steps of functioning of the returning unit of figures 1 and 2.
Figure 4 is a schematic representation of the fluid connection of the returning element to vacuum pumps, according to an embodiment of the invention.
Figure 5 is a schematic representation of the fluid connection of the returning element to vacuum pumps, according to an alternative embodiment the invention.

### Description of an embodiment

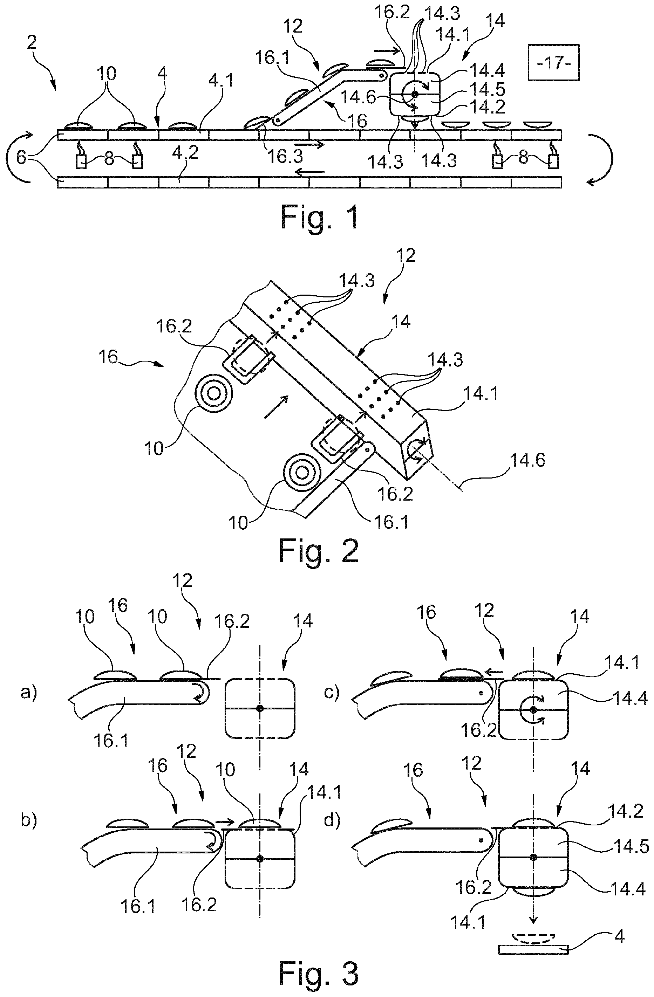

Figure 1 illustrates in a schematic way a production line of baked flat food products like pancakes. Such products are baked in an open environment (i.e. contrary to an oven) on a baking or cooking hot surface, and this for instance on both sides.

The production line 2 comprises a main conveyor 4 carrying a series of baking plates 6 arranged next to each other along the conveyor. A support chain (not represented) can be provided for supporting the baking plates 6. The support chain and the baking plates form a closed loop with an upper portion 4.1 that for instance moves from left to right and a lower portion 4.2 that for instance moves from right to left. The closed loop rotates at about 180° around two supporting rolls (not represented). A series of burners 8 are provided below the baking plates 6 of the upper portion 4.1 for baking the pancakes 10. The production line 2 comprises also a dough pouring unit (also not represented) at the beginning of the upper portion 4.1 of the main conveyor 4, as such well known to the skilled person.

The production line 4 is equipped with a returning unit 12 of the pancakes 10. The returning unit 12 comprises essentially a returning element 14 showing at least one outer face 14.1 or 14.2 provided with aspiration holes 14.3. For instance the returning element 14 comprises a first outer face 14.1 and a second outer face 14.2 opposed to the first outer face 14.1. The aspiration holes 14.3 provided on the first outer face 14.1 are in direct fluid communication with a first vacuum chamber 14.4 and similarly the aspiration holes 14.3 provided on the second outer face 14.2 are in direct fluid communication with a second vacuum chamber 14.5. These first and second vacuum chambers 14.4 and 14.5 are distinct and not in fluid communication. Each of them is fluidly connected to a corresponding vacuum pump as this will be detailed further below. The returning element 14 is rotatable around a rotation axis 14.6 that extends through a central area of the transversal cross-section of the returning element 14. The vacuum applied to the chamber in fluid connection with the aspiration holes 14.3 allows a flat food product, for instance a pancake, to be maintained against the outer face by depression of its under face contacting said outer face. The food product can be maintained in position during rotating of the returning element 14 until the food product is in a returned and lower position where it can be released from the returning element 14.

The returning unit 12 can also comprise a loading conveyor 16, being for instance of the belt-type. It is shaped and oriented for collecting the food products, for instance the pancakes 10, from the main conveyor 4 and loading them onto the returning element 14, more particularly on one of the at least one outer face 14.1 and 14.2. The loading conveyor 16 is a belt conveyor 16.1, of a well-known construction as such, advantageously of a curved or angled profile so as to show a first portion adjacent to the main conveyor 4 and showing a limited inclination angle relative thereto (e.g. less than 45°), and a second portion adjacent to the returning element 14 and being horizontal or close to horizontal (e.g. less than 20° inclination relative to horizontal). The loading conveyor 16 comprises a retractable end 16.2 configured for bringing the food products to one of the at least one outer face 14.1 and 14.2 of the returning element 14. The retractable end 16.2 can be configured for moving in translation from a retracted position where it is located mainly on to the belt conveyor to a deployed position where it is located mainly on the outer face 14.1 or 14.2 of the returning element 14. The loading conveyor 16 can also comprise a scraper 16.3 adjacent to the main conveyor 4 and the entry of the belt conveyor 16.1, arranged for scraping the food products from the main conveyor 4 while it is moving and guiding said food products towards the belt conveyor 16.1.

The returning unit 12 comprises a control unit 17 that is configured for controlling operations of the returning element 14 and the loading conveyor 16, as described here below. The control unit 17 can also belong to the production line 2 and control additional operations like pouring the dough preparation and baking the food products.

In operation, the production line 2 illustrated in figure 1 functions as follows. The food products, e.g. the pancakes 10, are poured and baked on the baking plates 6 of the main conveyor, thanks to a pouring unit (not represented) and the burners 8. Once baked on one face, the food products 10 move towards the returning unit 12 where they are collected by the loading conveyor 16 from the main conveyor 4 towards the returning element 14. The food product(s) reaching the end of the loading conveyor 16 is/are transferred to the outer face 14.1 of the returning element 14. The vacuum in the first vacuum chamber 14.4 applied to the aspiration holes 14.3 maintains the food product 10 against the first outer face 14.1 while the returning element 14 is rotated, for instance of 180°, so as to bring the first outer face 14.1 to a lower and returned position, corresponding for instance to the position of the second outer face 14.2 as represented in figure 1. Once that position reached, the vacuum in the first vacuum chamber 14.4 is stopped, releasing the food product 10 from the first outer face 14.1 and allow it to fall by gravity back on the main conveyor 4, in a returned stated. The returned side of the food products can then be baked on the baking plates 4.1 by means of the burners 8 located downstream of the returning unit 12.

The relative vacuum pressure is advantageously not greater than 50mbar, preferably not greater than 40mbar, below atmospheric pressure, in particular for pancakes. Depending on the food product, higher vacuum pressures could damage the food product, for instance a pancake, by piercing said food product and extruding the food product material into the aspiration holes, thereby plugging said aspiration holes and losing the sought pressing force of said food product against the corresponding outer face 14.1 or 14.2. This sensibility of the food product to the vacuum pressure depends on the composition of the product and possibly of its baking or cooking grade. Food product made of meat are for example substantially more resistant than bakery products.

Still in operation, while the returning element 14 has rotated, for instance of 180°, for bringing the first outer face 14.1 to a lower position, the second outer face 14.2 is moved to an upper position, corresponding for instance to the initial position of the first outer face 14.1, able to receive another food product while the previous one is returned and at the point to be released. The presence of several outer faces on the returning element 14 allows a higher production rate in that the returning element 14 does not need to bring the otherwise unique outer face back to the upper loading position for loading the next food product(s).

In the configuration illustrated in figure 1 where the returning element 14 shows two opposed outer faces 14.1 and 14.2, the returning element rotates by increments of about 180°. These successive rotations can be in the same rotational direction or alternatively in opposed rotational directions.

Figure 2 is a perspective view of the returning unit 12 of the production line of figure 1. We can observe that the returning unit 12 can extend transversely to the longitudinal direction of the production line, so as to return at the same time several food products of a same row of the production line. In figure 2, only two food products are represented in each row, being understood that this can be substantially more.

Still in figure 2, we can observe that the retractable end 16.2 of the loading belt conveyor 16.1 comprises a translational sheet or blade configured for being moved, in the retracting movement, along the belt and below the food products 10, and, in the deploying movement, along the corresponding outer face 14.1 of the returning element 14. The blade can show a U-shaped profile with an opening of the U oriented towards the returning element 14. This is advantageous in that once moved to the deployed position on the returning element, the vacuum applied to the aspiration holes presses the central portion of the food product against the corresponding outer face 14.1, so that the blade can moved back to the retracted position while the food product remains in position, avoiding any unwanted movement thereof.

Still in figure 2, distinct blades of the retractable end 16.2 are represented being however understood that they are advantageously linked to each other so as to form a single element. Translational means can be provided at the two opposed ends of that single blade element.

As this is apparent in figure 2, the returning element 14 shows a polygonal cross-section and preferably extends along the rotation axis 14.6. The returning element 14 is advantageously a polygonal hollow profile with one or several separation walls between the vacuum chambers associated with the aspiration holes provided in the respective outer faces.

Still with reference to figure 2, the aspiration holes 14.3 are arranged in groups along the returning element 14, where each group corresponds to the size of the food product 10. In figure 2, each group comprises 9 aspiration holes 14.3 arranged in an array of three rows and three columns. This is merely exemplary. For a circular food product 10 such as a pancake, the aspiration holes in each group can be arranged in concentric circles and not in an array.

Figures 3(a)-3(d) show four successive steps of functioning of the returning unit of figures 1 and 2.

In figure 3(a), the food product 10 reaching the end of the loading conveyor 16 is positioned in the retractable end 16.2 in a retracted position. This can be achieved either by a forward movement of the belt of the belt conveyor while the retractable end 16.2 is in the retracted position or by a movement of the retractable end 16.2 from the deployed position back to the retracted position.

In figure 3(b), the food product 10 on the retractable end 16.2 is transferred and loaded to the first outer face 14.1 of the returning element 14. In the meantime, the belt conveyor 16.1 can move further so as to advance the next food product.

In figure 3(c), vacuum is applied to the first vacuum chamber 14.4 in order to maintain the food product by depression against the first outer face 14.1. The retractable end 16.2 is retracted and thereby moved below the next food product. With reference to the above discussion, the action of bringing the next food product on the retractable end 16.2 in the retracted position can be different form the one considered here. Indeed, alternatively, vacuum can be applied only after retraction of the retractable end 16.2. This can depend on the food product, for instance the extent to which said food product is baked, i.e. how fragile it is. For instance, the food product is baked only partially before being returned and further baked on the other side, meaning that it is potentially fragile at this stage. The retraction speed of the retractable end 16.2 is advantageously of at least 250mm/s for ensuring a proper retraction where the food product, due it is inertia, remains on the first outer face 14.1 of the returning element 14.

In figure 3(d), the returning element 14 is rotated, e.g. clockwise, by about 180° so as to bring the first outer face 14.1 to a lower and returned position, while applying vacuum to the first vacuum chamber 14.4. Once that rotation done, the next food product is transferred and loaded by the retractable end 16.2 to the second outer face 14.2 being now in upper and loading position. Also, the vacuum in the first vacuum chamber 14.4 is released for releasing the food product from the first outer face 14.1 and allowing said food product to be deposited in a returned state on an unloading conveyor being for instance the main conveyor 4.

Important is to note that the returning movement of the food product illustrated in figure 3(d) is achieved without any physical retaining means pressing said food product against the corresponding outer face 14.1 or 14.2. In other words, the food product 10 is maintained against the corresponding outer face 14.1 or 14.2 during the returning operation only by virtue of the pressure difference between its outer face and its inner face, due to the vacuum.

After the steps of figure 3(d), the steps of figure 3(c)-3(d) can be iterated.

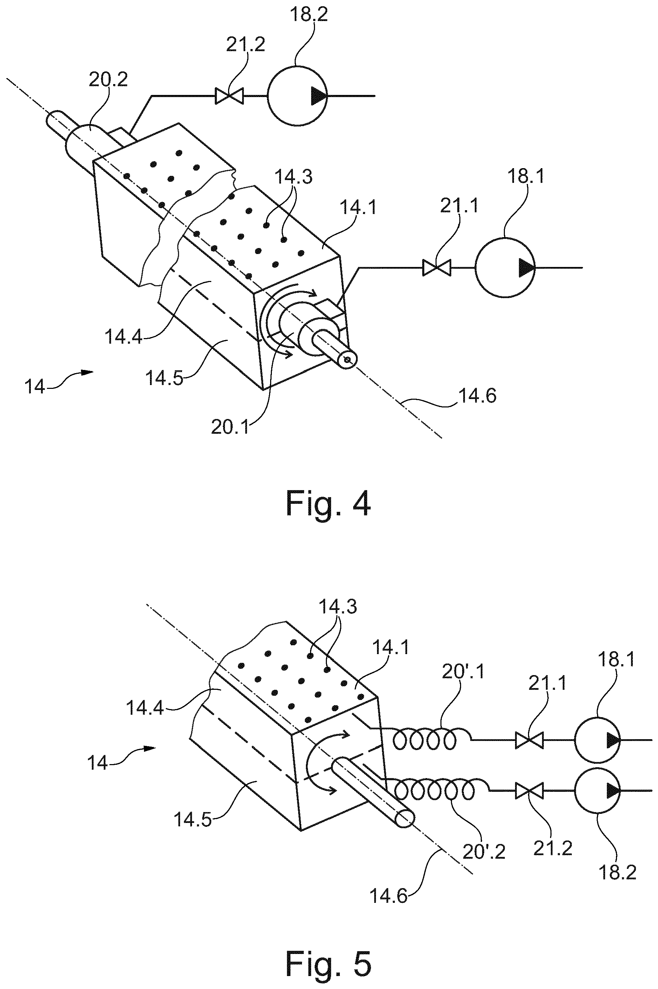

Figure 4 is a schematic representation of the fluid connection of the returning element to vacuum pumps, according to an embodiment of the invention.

In figure 4, the returning element 14 has its two vacuum chambers 14.4 and 14.5 fluidly connected to respective vacuum pumps 18.1 and 18.2. This fluid connection is provided by two rotating joints 20.1 and 20.2 mounted at the opposed ends of the hollow profile forming the returning element 14, along the rotation axis 14.6. Such rotating joints allow a tight fluid connection between a fixed fluid connection and a rotating fluid connection. In the present case, the rotating fluid connection is rigidly fixed with the returning element 14 that is rotatable and is in fluid connection with one of the first and second vacuum chambers 14.4 and 14.5. Shut-off valves 21.1 and 21.2 can be provided fluidly between the rotating joints 20.1 and 20.2 and the respective vacuum pumps 18.1 and 18.2.

With such a rotatable fluid connection, the returning element 14 can rotated in the same rotational direction at every rotation step.

Figure 5 is a schematic representation of the fluid connection of the returning element to vacuum pumps, according to an alternative embodiment the invention.

Here, the fluid connection between the first and second vacuum chambers 14.4 and 14.5 is via flexible hoses or conduits 20'.1 and 20'.2 which allow the returning element 14 to rotate up to a given angle without damages. This means the in operation the returning element 14 needs to reciprocate, i.e. turn successively in opposed rotational directions.

In figure 5, the flexible hoses 20'.1 and 20'.2 are represented schematically as being spiral-shaped, being however understood that other shapes and configuration are possible, e.g. coiled around the rotation axis 14.6.

## Claims

1. Unit (12) for returning one or several flat food products (10), comprising:
- a returning element (14) configured for rotating around a rotating axis (14.6) and provided with at least one outer face (14.1, 14.2) for receiving the one or several flat food products (10) to be returned; wherein the at least one outer face (14.1, 14.2) is provided with air aspiration holes (14.3) for maintaining by depression the one or several flat food products (10) on said outer face (14.1, 14.2) when the returning element (14) is rotated with said outer face (14.1, 14.2) oriented downwardly; and
- a loading conveyor (16) configured for loading the one or several flat food products (10) on one of the at least one outer face (14.1, 14.2) of the returning element (14);
**characterized in that**
the loading conveyor (16) is a belt conveyor (16.1) with a retractable end (16.2) configured for selectively extending from said belt to bring the one or more flat food products (10) from the belt to one of the at least one outer face (14.1, 14.2) of the returning element (14), and retracting to said belt away from said outer face.

2. Unit (12) according to claim 1, wherein each of the at least one outer face (14.1, 14.2) is flat.

3. Unit (12) according to one of claims 1 and 2, wherein the at least one outer face comprises a first outer face (14.1) and a second outer face (14.2) opposed to the first outer surface (14.1).

4. Unit (12) according to one of claims 1 and 2, wherein the at least one outer face comprises more than two outer faces distributed around the rotating axis.

5. Unit (12) according to any one of claims 1 to 4, wherein the returning element (14) is elongate along the rotating axis (14.6) and each of the at least one outer face (14.1, 14.2) is subdivided in several areas each for receiving one of the several flat food products (10).

6. Unit (12) according to any one of claims 1 to 5, wherein the returning element (14) comprises a specific vacuum chamber (14.4, 14.5) in fluid connection with the air aspiration holes (14.3) for each of the at least one outer face (14.1, 14.2), preferably further comprising means configured for limiting the vacuum to not more than 50mbar below atmospheric pressure.

7. Unit (12) according to any one of claims 1 to 6, wherein the returning element (14) forms a hollow profile extending along the rotation axis (14.6) and showing a cross-section with at least one outer wall forming the at least one outer face (14.1, 14.2).

8. Unit (12) according to any one of claims 1 to 8, further comprising:
- an unloading conveyor located below the returning element (14) and configured for receiving the one or several flat food products (10) in a returned state.

9. Unit (12) according to claim 8, wherein the unloading conveyor forms a main conveyor (4) extending on an entry side of the unit, the loading conveyor (16) being configured for collecting the one or more flat food products (10) from the main conveyor (4), preferably wherein the main conveyor (4) comprises cooking plates (4.1) attached to each other along a main direction of said main conveyor (4) and configured for receiving, each and along said main direction, one of the flat food products (10).

10. Unit (12) according to any one of claims 1 to 9, wherein the air aspiration holes (14.3) on each of the at least one outer face (14.1, 14.2) comprise several of said air aspiration holes (14.3) distributed in a direction perpendicular to the rotating axis (14.6) for each of the one or several flat food products (10).

11. Unit (12) according to any one of claims 1 to 10, wherein the returning element 14 is free of mechanical means for clamping the one or several flat food products (10) against the at least one outer face (14.1, 14.2).

12. Unit (12) according to any one of claims 1 to 11, further comprising:
- at least one vacuum pump (18.1, 18.2) fluidly connected (20.1, 20.2, 20'.1, 20'.2) to the air aspiration holes (14.3) of the at least one outer face (14.1, 14.2) of the returning element (14).

13. Process of returning one or several flat food products (10) using a unit (12) in accordance with any of claims 1 to 12, comprising the steps of:
(a) loading the one or several flat food products (10) on an outer surface (14.1, 14.2) of a returning element (14) of said unit (12);
(b) rotating the returning element (14) so as to return the one or several flat food products (10); and
(c) unloading the one or several flat food products (10) from the returning element (14);
**characterized in that**
step (a) comprises using a loading conveyor of said unit (12) being a belt conveyor (16.1) with a retractable end (16.2) extending from said belt to bring the one or several flat food products (10) from said belt to the outer face (14.1, 14.2) of the returning element (14), and retracting to said belt away from said outer face;
step (b) comprises maintaining the one or several flat food products (10) on the outer face (14.1, 14.2) by applying a depression on a lower face of the one or several flat food products (10) via air aspiration holes (14.3) provided on said outer face (14.1, 14.2); and
step (c) comprises releasing the depression on the one or several flat food products (10).

14. Process according to claim 13, wherein step (c) comprises applying compressed air to the air aspiration holes (14.3) for facilitating releasing of the one or several flat food products (10) from the outer face (14.1, 14.2).

15. Process according to one of claims 13 and 14, wherein the returning element (14) comprises a vacuum chamber (14.4, 14.5) in fluid connection with the air aspiration holes (14.3) on the outer face (14.1, 14.2), and in step (b), a vacuum of not more than 50mbar below atmospheric pressure is applied in the vacuum chamber (14.4, 14.5) for applying the depression, and/or wherein in step (b) the one or several flat food products (10) are maintained on the outer face (14.1, 14.2) by the depression only.

## Patentansprüche

1. Einheit (12) zum Wenden eines oder mehrerer flacher Lebensmittelprodukte (10), umfassend:
- ein Wendeelement (14), das zum Rotieren um eine Rotationsachse (14.6) eingerichtet ist und mit mindestens einer Außenfläche (14.1, 14.2) zum Aufnehmen des oder der zu wendenden flachen Lebensmittelprodukte (10) versehen ist, wobei die mindestens eine Außenfläche (14.1, 14.2) mit Luftansaugöffnungen (14.3) zum Halten des oder der flachen Lebensmittelprodukte (10) mittels Unterdruck an der genannten Außenfläche (14.1, 14.2) versehen ist, wenn das Wendeelement (14) mit nach unten gerichteter genannter Außenfläche (14.1, 14.2) rotiert; und
- einen Zuführförderer (16), der zum Aufgeben des oder der flachen Lebensmittelprodukte (10) auf eine der mindestens einen Außenflächen (14.1, 14.2) des Wendeelements (14) eingerichtet ist;
**dadurch gekennzeichnet, dass**
der Zuführförderer (16) ein Gurtförderer (16.1) mit einem zurückziehbaren Ende (16.2) ist, das so eingerichtet ist, dass es selektiv aus dem genannten Gurt heraus verlängert wird, um das oder die flachen Lebensmittelprodukte (10) vom Gurt zu einer der mindestens einen Außenflächen (14.1, 14.2) des Wendeelements (14) zu bringen, und zu dem genannten Gurt zurückgezogen wird, weg von der genannten Außenfläche.

2. Einheit (12) nach Anspruch 1, wobei jede der mindestens einen Außenflächen (14.1, 14.2) flach ist.

3. Einheit (12) nach einem der Ansprüche 1 und 2, wobei die mindestens eine Außenfläche eine erste Außenfläche (14.1) und eine zweite Außenfläche (14.2) umfasst, die der ersten Außenfläche (14.1) gegenüberliegt.

4. Einheit (12) nach einem der Ansprüche 1 und 2, wobei die mindestens eine Außenfläche mehr als zwei Außenflächen umfasst, die um die Rotationsachse herum verteilt sind.

5. Einheit (12) nach einem der Ansprüche 1 bis 4, wobei das Wendeelement (14) sich entlang der Rotationsachse (14.6) länglich erstreckt und jede der mindestens einen Außenflächen (14.1, 14.2) in mehrere Bereiche unterteilt ist, von denen jeder zum Aufnehmen jeweils eines der mehreren flachen Lebensmittelprodukte (10) eingerichtet ist.

6. Einheit (12) nach einem der Ansprüche 1 bis 5, wobei das Wendeelement (14) eine spezifische Vakuumkammer (14.4, 14.5) in Fluidverbindung mit den Luftansaugöffnungen (14.3) für jede der mindestens einen Außenflächen (14.1, 14.2) umfasst, vorzugsweise ferner Mittel umfassend, die so eingerichtet sind, dass sie das Vakuum auf höchstens 50 mbar unterhalb des atmosphärischen Drucks begrenzen.

7. Einheit (12) nach einem der Ansprüche 1 bis 6, wobei das Wendeelement (14) ein Hohlprofil bildet, das sich entlang der Rotationsachse (14.6) erstreckt und einen Querschnitt mit mindestens einer Außenwand aufweist, die die mindestens eine Außenfläche (14.1, 14.2) bildet.

8. Einheit (12) nach einem der Ansprüche 1 bis 7, ferner umfassend:
- einen unterhalb des Wendeelements (14) angeordneten Abförderer, der zum Aufnehmen des oder der flachen Lebensmittelprodukte (10) in gewendetem Zustand eingerichtet ist.

9. Einheit (12) nach Anspruch 8, wobei der Abförderer einen Hauptförderer (4) bildet, der sich auf einer Einlassseite der Einheit erstreckt, wobei der Zuführförderer (16) so eingerichtet ist, dass er das oder die flachen Lebensmittelprodukte (10) von dem Hauptförderer (4) aufnimmt, vorzugsweise wobei der Hauptförderer (4) Kochplatten (4.1) umfasst, die entlang einer Hauptförderrichtung des genannten Hauptförderers (4) miteinander verbunden sind und so eingerichtet sind, dass sie jeweils und entlang der genannten Hauptförderrichtung eines der flachen Lebensmittelprodukte (10) aufnehmen.

10. Einheit (12) nach einem der Ansprüche 1 bis 9, wobei die Luftansaugöffnungen (14.3) auf jeder der mindestens einen Außenflächen (14.1, 14.2) mehrere der genannten Luftansaugöffnungen (14.3) umfassen, die für jedes der einen oder mehreren flachen Lebensmittelprodukte (10) in einer Richtung senkrecht zur Rotationsachse (14.6) verteilt sind.

11. Einheit (12) nach einem der Ansprüche 1 bis 10, wobei das Wendeelement (14) frei von mechanischen Mitteln zum Klemmen des oder der flachen Lebensmittelprodukte (10) gegen die mindestens eine Außenfläche (14.1, 14.2) ist.

12. Einheit (12) nach einem der Ansprüche 1 bis 11, ferner umfassend:
- mindestens eine Vakuumpumpe (18.1, 18.2), die in Fluidverbindung (20.1, 20.2, 20'.1, 20'.2) mit den Luftansaugöffnungen (14.3) der mindestens einen Außenfläche (14.1, 14.2) des Wendeelements (14) steht.

13. Verfahren zum Wenden eines oder mehrerer flacher Lebensmittelprodukte (10) unter Verwendung einer Einheit (12) nach einem der Ansprüche 1 bis 12, umfassend die Schritte:
(a) Aufgeben des oder der flachen Lebensmittelprodukte (10) auf eine Außenfläche (14.1, 14.2) eines Wendeelements (14) der genannten Einheit (12);
(b) Rotieren des Wendeelements (14), um das oder die flachen Lebensmittelprodukte (10) zu wenden; und
(c) Abgeben des oder der flachen Lebensmittelprodukte (10) von dem Wendeelement (14);
**dadurch gekennzeichnet, dass**
Schritt (a) die Verwendung eines Zuführförderers der genannten Einheit (12) umfasst, der ein Gurtförderer (16.1) mit einem zurückziehbaren Ende (16.2) ist, das sich aus dem genannten Gurt erstreckt, um das oder die flachen Lebensmittelprodukte (10) von dem genannten Gurt zu der Außenfläche (14.1, 14.2) des Wendeelements (14) zu bringen, und zu dem genannten Gurt zurückgezogen wird, weg von der genannten Außenfläche;
Schritt (b) umfasst, das oder die flachen Lebensmittelprodukte (10) auf der Außenfläche (14.1, 14.2) zu halten, indem ein Unterdruck auf eine Unterseite des oder der flachen Lebensmittelprodukte (10) über Luftansaugöffnungen (14.3) angewendet wird, die auf der genannten Außenfläche (14.1, 14.2) vorgesehen sind; und
Schritt (c) umfasst, den Unterdruck auf das oder die flachen Lebensmittelprodukte (10) aufzuheben.

14. Verfahren nach Anspruch 13, wobei Schritt (c) das Anlegen von Druckluft an die Luftansaugöffnungen (14.3) umfasst, um das Lösen des oder der flachen Lebensmittelprodukte (10) von der Außenfläche (14.1, 14.2) zu erleichtern.

15. Verfahren nach einem der Ansprüche 13 und 14, wobei das Wendeelement (14) eine Vakuumkammer (14.4, 14.5) in Fluidverbindung mit den Luftansaugöffnungen (14.3) an der Außenfläche (14.1, 14.2) umfasst und in Schritt (b) ein Vakuum von höchstens 50 mbar unterhalb des atmosphärischen Drucks in der Vakuumkammer (14.4, 14.5) zur Erzeugung des Unterdrucks angelegt wird, und/oder wobei in Schritt (b) das eine oder die mehreren flachen Lebensmittelprodukte (10) ausschließlich durch den Unterdruck an der Außenfläche (14.1, 14.2) gehalten werden.

## Revendications

1. Unité (12) pour retourner un ou plusieurs produits alimentaires plats (10), comprenant:
- un élément de retournement (14) configuré pour tourner autour d'un axe de rotation (14.6) et pourvu d'au moins une face externe (14.1, 14.2) destinée à recevoir le ou les produits alimentaires plats (10) à retourner, la ou lesdites faces externes (14.1, 14.2) étant pourvues de trous d'aspiration d'air (14.3) afin de maintenir par dépression le ou les produits alimentaires plats (10) sur ladite face externe (14.1, 14.2) lorsque l'élément de retournement (14) est entraîné en rotation avec ladite face externe (14.1, 14.2) orientée vers le bas ; et
- un convoyeur de chargement (16) configuré pour charger le ou les produits alimentaires plats (10) sur l'une de la ou des faces externes (14.1, 14.2) de l'élément de retournement (14) ;
**caractérisée en ce que**
le convoyeur de chargement (16) est un convoyeur à bande (16.1) à extrémité escamotable (16.2), configuré pour se déployer sélectivement à partir de ladite bande afin d'acheminer le ou les produits alimentaires plats (10) depuis la bande vers l'une de la ou des faces externes (14.1, 14.2) de l'élément de retournement (14), et pour se rétracter vers ladite bande à l'écart de ladite face externe.

2. Unité (12) selon la revendication 1, dans laquelle chacune de la ou des faces externes (14.1, 14.2) est plane.

3. Unité (12) selon l'une des revendications 1 et 2, dans laquelle la ou les faces externes comprend une première face externe (14.1) et une seconde face externe (14.2) opposée à la première face externe (14.1).

4. Unité (12) selon l'une des revendications 1 et 2, dans laquelle la ou les faces externes comprend plus de deux faces externes réparties autour de l'axe de rotation.

5. Unité (12) selon l'une quelconque des revendications 1 à 4, dans laquelle l'élément de retournement (14) est allongé selon l'axe de rotation (14.6) et chacune de la ou des faces externes (14.1, 14.2) est subdivisée en plusieurs zones, chacune destinée à recevoir l'un des plusieurs produits alimentaires plats (10).

6. Unité (12) selon l'une quelconque des revendications 1 à 5, dans laquelle l'élément de retournement (14) comprend une chambre à vide spécifique (14.4, 14.5) en liaison fluidique avec les trous d'aspiration d'air (14.3) pour chacune de la ou des faces externes (14.1, 14.2), comprenant de préférence en outre des moyens configurés pour limiter le vide à au plus 50 mbar en dessous de la pression atmosphérique.

7. Unité (12) selon l'une quelconque des revendications 1 à 6, dans laquelle l'élément de retournement (14) forme un profilé creux s'étendant selon l'axe de rotation (14.6) et présentant une section transversale avec au moins une paroi externe formant la ou les faces externes (14.1, 14.2).

8. Unité (12) selon l'une quelconque des revendications 1 à 8, comprenant en outre :
- un convoyeur de déchargement disposé sous l'élément de retournement (14) et configuré pour recevoir le ou les produits alimentaires plats (10) à l'état retourné.

9. Unité (12) selon la revendication 8, dans laquelle le convoyeur de déchargement forme un convoyeur principal (4) s'étendant sur un côté d'entrée de l'unité, le convoyeur de chargement (16) étant configuré pour collecter le ou les produits alimentaires plats (10) à partir du convoyeur principal (4), de préférence dans laquelle le convoyeur principal (4) comprend des plaques de cuisson (4.1) fixées les unes aux autres selon une direction principale dudit convoyeur principal (4) et configurées pour recevoir, chacune et le long de ladite direction principale, l'un des produits alimentaires plats (10).

10. Unité (12) selon l'une quelconque des revendications 1 à 9, dans laquelle les trous d'aspiration d'air (14.3) sur chacune de la ou des faces externes (14.1, 14.2) comprennent plusieurs desdits trous d'aspiration d'air (14.3) répartis dans une direction perpendiculaire à l'axe de rotation (14.6) pour chacun du ou des produits alimentaires plats (10).

11. Unité (12) selon l'une quelconque des revendications 1 à 10, dans laquelle l'élément de retournement (14) est dépourvu de moyens mécaniques pour serrer le ou les produits alimentaires plats (10) contre la ou les faces externes (14.1, 14.2).

12. Unité (12) selon l'une quelconque des revendications 1 à 11, comprenant en outre :
- au moins une pompe à vide (18.1, 18.2) en liaison fluidique (20.1, 20.2, 20'.1, 20'.2) avec les trous d'aspiration d'air (14.3) de la ou des faces externes (14.1, 14.2) de l'élément de retournement (14).

13. Procédé de retournement d'un ou de plusieurs produits alimentaires plats (10) au moyen d'une unité (12) conforme à l'une quelconque des revendications 1 à 12, comprenant les étapes consistant à :
(a) charger le ou les produits alimentaires plats (10) sur une face externe (14.1, 14.2) d'un élément de retournement (14) de ladite unité (12) ;
(b) entraîner en rotation l'élément de retournement (14) de manière à retourner le ou les produits alimentaires plats (10) ; et
(c) décharger le ou les produits alimentaires plats (10) de l'élément de retournement (14) ;
**caractérisé en ce que**
l'étape (a) comprend l'utilisation d'un convoyeur de chargement de ladite unité (12) étant un convoyeur à bande (16.1) à extrémité escamotable (16.2) s'étendant à partir de ladite bande afin d'acheminer le ou les produits alimentaires plats (10) depuis ladite bande vers la face externe (14.1, 14.2) de l'élément de retournement (14), puis se rétractant vers ladite bande à l'écart de ladite face externe ;
l'étape (b) comprend le maintien du ou des produits alimentaires plats (10) sur la face externe (14.1, 14.2) par application d'une dépression sur une face inférieure du ou des produits alimentaires plats (10) via des trous d'aspiration d'air (14.3) prévus sur ladite face externe (14.1, 14.2) ; et
l'étape (c) comprend la suppression de la dépression sur le ou les produits alimentaires plats (10).

14. Procédé selon la revendication 13, dans lequel l'étape (c) comprend l'application d'air comprimé aux trous d'aspiration d'air (14.3) afin de faciliter le relâchement du ou des produits alimentaires plats (10) de la face externe (14.1, 14.2).

15. Procédé selon l'une des revendications 13 et 14, dans lequel l'élément de retournement (14) comprend une chambre à vide (14.4, 14.5) en liaison fluidique avec les trous d'aspiration d'air (14.3) sur la face externe (14.1, 14.2), et dans l'étape (b), un vide d'au plus 50 mbar en dessous de la pression atmosphérique est appliqué dans la chambre à vide (14.4, 14.5) pour appliquer ladite dépression, et/ou dans lequel, dans l'étape (b), le ou les produits alimentaires plats (10) sont maintenus sur la face externe (14.1, 14.2) uniquement par ladite dépression.
